# EUROPEAN PATENT APPLICATION

(11) **EP 3 506 250 A1**
(43) Date of publication of application: **03.07.2019**
(21) Application number: 17210759.1
(22) Date of filing: 27.12.2017
(51) Int. Cl.: G09G 5/06, G06F 21/84

(54) **DISPLAY DEVICE FOR PROVIDING A SCRAMBLING AND DESCRAMBLING VIDEO OR IMAGE**

(71) Applicant: Vestel Elektronik Sanayi ve Ticaret A.S., 45030 Manisa (TR)
(72) Inventor: ÖZTEKIN, Güner, 45030 Manisa (TR); YILMAZ, Evren Gökhan, 45030 Manisa (TR)
(74) Representative: Ascherl, Andreas

(57) **Abstract**

A system (3) for enabling privacy while using a display device (1) is described which comprises a display device (1) and a correction device (1). The display device (1) comprising a memory unit (6) adapted to store a lookup gamma table (7), a display screen (8) adapted to receive and display the video or image (5), and a display processing unit (9) adapted to fetch the gamma lookup table (7), and to apply the gamma lookup table (7) onto luminance or tristimulus values of the video or image (5), wherein on application of the gamma lookup table (7), the video or image (5) is scrambled to provide the scrambled view (4) for the video or image (5). The correction device (2) comprising a correction screen (11) which is transparent to allow see through by a human eye, and a screen processing unit (12) adapted to fetch a correction gamma table (10) corresponding to the gamma lookup table (7), and adapted to apply the correction gamma table (10) onto luminance or tristimulus value of the scrambled view (4) of the video or image (5), wherein on application of the correction gamma table (10) onto the scrambled view (4), the scrambled view (4) of the video or image (5) is descrambled to provide a recognizable view (13) of the video or image (5).

## Description

This invention refers to a display device for providing a scrambled view for a video or image according to claim 1, a correction device adapted to descramble a scrambled view of a video or image according to claim 2, and a system for enabling privacy while using a display device according to claim 5.

### Background of the Invention

In today's technology, mobile devices and computers have a good picture quality where all images/data can be seen clearly on devices. People can have private information/data on their mobile devices and computer screens which they might not want to share this information/data with others.

To enable privacy of the content viewing in public, polarized films are used onto the screens of the display. This enables narrowing the viewing angle of the screen of the mobile devices and laptops, however the screen can still be seen with certain angle. Hence, it cannot complete ensure privacy while viewing the contents on the screen in public, as at least from some angles over the shoulder viewing is still possible.

US Patent Publication No. US2016170700A1 discloses techniques related to viewing a private image. The techniques may include a public device including a processor and a public display to display a display image. The techniques may also include an input receiver to receive input at the public device, and a privacy controller to alter the display image from the public display when the display image is private. Techniques may further include a transmitter to transmit the display image to a private device when the display image is private.

US Patent Publication No. US2017061164A1 discloses a system and method for a two-device scrambled display. A first device displays content in a scrambled form. A second device acts as an interpreter, including an input driver for receiving a scrambled input; an output driver for displaying an organically perceptible output; and one or more logic elements comprising a unscrambling engine operable for: receiving an input on the input driver; detecting that at least a portion of the input is scrambled; unscrambling the scrambled portion of the input; and outputting an unscrambled analog of the scrambled input via the output driver.

The technique used in the above disclosure has been described as scrambling a part of the screen and descrambling it with a wearable apparatus such as glasses. Firstly, when the scrambled image is output to the screen the image is in form of an analog signal. Therefore, this image has to be digitized again and the descrambled digital part must be converted to an analog signal again for the human eyes. In this way an image blurring, transfer and resolution technique will result in data loss. These losses will be further enhanced by looking at the screen not directly but with an angle and/or with ambient light effects, reflections, perspective effects etc. In addition, for implementation of this technique, additional hardware is needed, as image processor support is required on the screen side for image scrambling and descrambling on the glass side. This directly introduces a cost increase and design complexity. Also, the above disclosures also require an Internet connection, which can be a bottleneck in some scenario where Internet is not available.

Hence a solution is desired, which enables privacy of the user while watching contents in public, in such a way that no other person can recognize the contents, when seeing the content from any angle, even over the shoulder.

### Object of the Invention

It is therefore the object of the present invention is to provide for a technique for enabling user privacy of content viewing in public from personal devices, however without any data loss of the contents.

### Description of the Invention

The before mentioned object is solved by a display device for providing a scrambled view for a video or image according to claim 1.

A display device for providing a scrambled view for a video or image is disclosed according to the invention, such that the scrambled view is unrecognizable by a person, the display device comprising a memory unit adapted to store a lookup gamma table, a display screen adapted to receive and display a video or image, and a display processing unit adapted to fetch the gamma lookup table, and to apply the gamma lookup table onto luminance or tristimulus values of the video or image, wherein on application of the gamma lookup table, the video or image is scrambled to provide the scrambled view for the video or image, wherein the scrambled view is adapted to be descrambled to provide a recognizable view of the video or image by applying a correction gamma table corresponding to the gamma lookup table to luminance or tristimulus value of the scrambled view.

This provides for a mechanism for rendenring unrecognizable view of the video or image being displayed on the display device, and which can only be descrambled in a predefined way, and with a matching correction gamma table, hence ensuring complete privacy to the user for viewing the contents in the public.

The object of the invention is also achieved by correction device adapted to descramble a scrambled view of a video or image according to claim 2.

A correction device adapted to descramble a scrambled view of a video or image is also disclosed according to the invention which comprises a correction screen that is transparent to allow see through by a human eye, and a screen processing unit adapted to fetch a correction gamma table corresponding to the gamma lookup table, and adapted to apply the correction gamma table onto luminance or tristimulus value of a scrambled view of the video or image, wherein on application of the correction gamma table onto the scrambled view, the scrambled view of a video or image is descrambled to provide a recognizable view of the video or image.

The embodiment is helpful, as it provides a mechanism for allowing the content viewing only through a specific correcction device which is enabled to descramble the scrambled view by using a matching correcting gamma table.

Further preferred embodiments are subject-matter of dependent claims and/or of the following specification parts.

According to a preferred embodiment of the invention, the correction device comprises a screen unit, which further comprises the correction screen, and a normal screen which is transparent and onto which the correction gamma table is not applied.

This embodiment is beneficial as it provides a correction device, which can allow viewing of normal content which is not scrambled, as well as scrambled content by unscrambling, both at the same time.

According to a further embodiment of the invention, the correction device is an eye wearable unit, which is adapted to be worn by a human to keep the correction screen before the human eyes.

This embodiment is helpful, as it provides an easy utility of the correction device for a user, so that the user can easily wear the correction device without any need for holding the correction device either by hand, or any other external holder.

The object of the invention is also achieved by a system for enabling privacy while using a display device according to claim 5.

A system for enabling privacy is disclosed according to the invention, while using a display device, comprising a display device and a correction device. The display device comprises a memory unit adapted to store a gamma lookup table, a display screen adapted to receive and display a video or image, and a display processing unit adapted to fetch the gamma lookup table, and to apply the gamma lookup table onto luminance or tristimulus values of the video or image, wherein on application of the gamma lookup table, the video or image is scrambled to provide the scrambled view for the video or image. The correction device comprises a correction screen which is transparent to allow to see through by a human eye; and a screen processing unit adapted to fetch a correction gamma table corresponding to the gamma lookup table, and adapted to apply the correction gamma table onto luminance or tristimulus value of a scrambled view of the video or image, wherein on application of the correction gamma table onto the scrambled view, the scrambled view of a video or image is descrambled to provide a recognizable view of the video or image.

This embodiment is beneficial, as it provides a complete system of the display device and the correction device, which enables to maintain privacy of viewing of the contents in public, by scrambling and descrabling the view of the video or the image being displayed onto the display device. Thus, the privacy is ensured without any data loss while scrambling and descrambling the view of the contents.

According to another embodiment of the invention, the system comprises the correction device according to any of the claims 2 to 4.

This embodiment is beneficial as it incorporates all other embodiments of the correction device, for providing other specific embodiments of the system.

According to a further embodiment of the system, the correction gamma table is transpose of the lookup gamma table.

This embodiment is helpful, as it provides for a correction table, which provides for accuracy while descrambling the scrambled view.

According to a further preferred embodiment of the invention, the system comprises a system processing unit adapted to receive and process the correction gamma table and the lookup gamma table, and to determine if the tables pair to each other to provide a recognizable view using the correction gamma table onto the luminance or tristimulus of the scrambled view.

This embodiment is beneficial, as it provides a mechanism to verify whether the tables at the display side and the correction device side pairs or not, and thus help to determine whether private content viewing is possible or not between two devices.

According to another embodiment of the system, the memory unit further stores the correction gamma table corresponding to the lookup gamma table, and the display processing unit is adapted to fetch and send the correction gamma table to the screen processing unit.

This embodiment is beneficial, as it provides another way to enable pairing of the display device and the correction device.

According to a further embodiment of the invention, wherein the display processing unit is adapted to fetch and send the correction gamma table to the screen processing unit, when the display processing unit begins applying the gamma lookup table onto luminance or tristimulus values of the video or image.

The embodiment is beneficial, as it provides a mechanism for sending the correction gamma table instantaneously at the time of beginning of scrambling of the video or image, so that the screen display unit has the correction gamma table available at the beginning of scrambling of the video or image, so that no part of the content is left unviewed, due to untimely descrambling of the scrambled view.

According to another embodiment of the invention, the display processing unit is adapted to generate a trigger related to initiation of descrambling by the correction device, when the display processing unit starts applying the lookup correction table onto luminance or tristimulus values of the video or image, and the screen processing unit is adapted to receive the trigger and to initiate application of the correction gamma table onto the correction screen.

This embodiment is beneficial, as it helps to trigger the correction device to start descrambling the scrambled view, when the scrambling of the video or image begins.

According to a further embodiment of the invention, the correction device comprises a sensor to detect production of the scrambled view of the video or image and to generate a detection data, wherein the screen processing unit is adapted to receive and process the detection data, and based on the processing of the detection data, to initiate application of the correction gamma table onto luminance or tristimulus value of a scrambled view of the video or image.

This embodiment is beneficial, as it helps to detect scrambling of data at the correction device side, so that the screen processing unit can timely start the process of descrambling of the scrambled view.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 illustrates a schematic diagram of a system for scrambling and descrambling content for private viewing of the content in the public, according to an embodiment of the invention.
Fig. 2 shows a graphical representation of a comparison of a perceived brightness of colors by a human eyes and image captured by a camera for an actual luminance.
Fig. 3a shows a graphical representation of a luminance flow for gamma encoded image captured by a camera.
Fig. 3b shows a graphical representation of a gamma correction for luminance flow to be applied by a display device rendering the image.
Fig. 3c shows a graphical representation of a corrected luminance flow of the image after being rendered by the display device.
Fig. 4 illustrates a system of a mobile phone as display device and a glass as correction device, according to an embodiment of the invention.
Fig. 5 illustrates a schematic diagram of another automatic system for scrambling and descrambling content for private viewing of the content in the public, according to an embodiment of the invention.

### Detailed Description of the Drawings

The present invention focuses on using gamma correction for scrambling and descrambling of the contents to be viewed on a display device in the public.

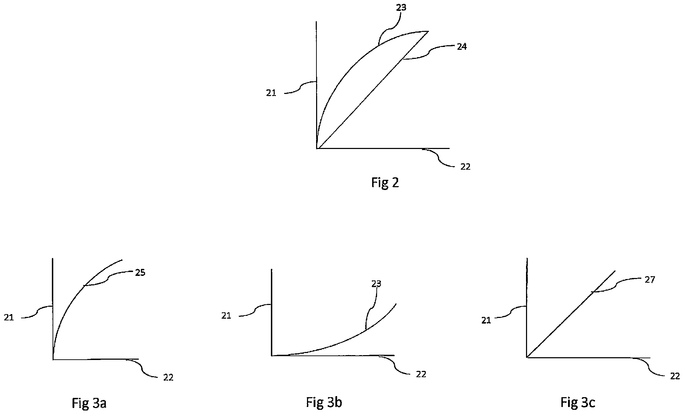

Human Eyes are very sensitive to colors compared to cameras. In Fig. 2, the difference in the perceived brightness of the colors by a human eye and image captured by a camera for an actual luminance is shown as a graphical representation. X axis is denoted by an axis 22 representing actual luminance, and Y axis is denoted by axis 21 representing perceived brightness. Further, the graph shows, a first curve 23 representative of actual luminance for perceived brightness by the human eye, and a second curve 24 representative of actual luminance for perceived brightness an image captured by a camera. The comparison of graph shows perception of brightness is higher for eyes.

Figures 3a-c show the processing of a normal image from being captured by a camera to finally rendering of the image by the display to be viewed by human eyes. X axis is denoted by an axis 22 representing actual luminance, and Y axis is denoted by axis 21 representing perceived brightness. In Fig 3a, a third curve 25 is shown which represents luminance flow for a gamma encoded image captured by a camera. The camera captures the image in a linear luminance range then it applies a gamma encoding. In Fig. 3b, a fourth curve 26 is shown which represents luminance flow of a gamma correction (reverse gamma) to be applied by the display device. In Fig 3c, a fifth curve 27 is shown which represents a corrected luminance flow of the image after being rendered by the display device. This fifth curve 27 represents the original luminance range.

Gamma correction is not a linear scaling. Indeed, gamma correction is done with a kind of lookup table for a given luminance range.

In the current invention, gamma correction approach is applied using a lookup gamma table. The display device has a unique and scrambled lookup gamma table which results in an unrecognizable image on its screen. No one can see it without help of any correction device. The lookup gamma table is intentionally scrambled for this purpose.

The invention also uses a correction device that has special part, which applies descrambled gamma table for the corresponding device. Therefore, the correction device and the display device are paired devices with their matching gamma correction tables.

Key advantages of the invention are that it does not introduce require an additional image processor for image processing or another memory unit for storing the processed images, hence it saves on the processing cost as well as storage cost, both at display device side and the correction device side. Additionally, the invention need not depend on the internet for transferring the processed images.

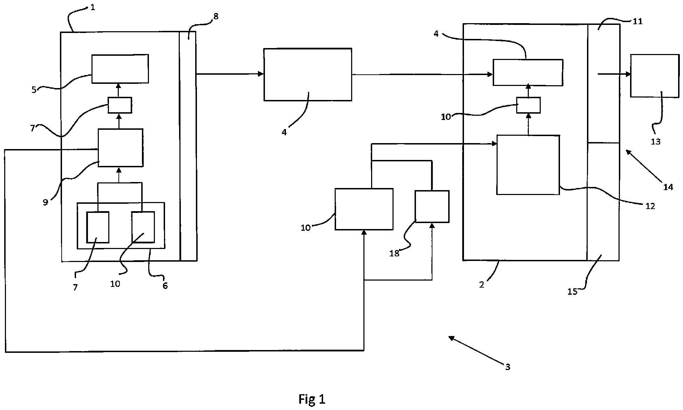

Fig. 1 illustrates a schematic diagram of an embodiment of a system 3 for scrambling and descrambling content for private viewing of the content in the public. The system 3 includes a display device 1 and a correction device 2. The display device 1 and the correction device 2 has an optical coupling such that a video or image 5 displayed on a display screen 8 of the display device 1 can be viewed through a screen unit 14 of the correction device 2. However, for the public viewing of the video or image 5, the video or image 5 are scrambled to produce a scrambled view 4 while being displayed onto the display screen 8. This scrambled view 4 is not recognizable to a person viewing on the display screen 8, until the time he is not using the correction device 2 which further converts the scrambled view 4 into a recognizable view 13 while displaying the same on a correction screen 11 of the screen unit 14.

The display device 1 also includes a memory unit 6, which includes a lookup gamma table 7 and a correction gamma table 10. The lookup gamma table 7 is applied onto luminance or tristimulus values of the video or image 5 to scramble the video or image 5 for producing the scrambled view 4 of the video or image 5. This scrambled view 4 remains unrecognizable to a human eye, until the time luminance or tristimulus value of the scrambled view 4 of the video or image 5 is corrected by applying the correction gamma table 10.

The display device 1 also includes a display processing unit 9 which fetched the lookup gamma table 7 from the memory unit 6 and further applies it onto the onto luminance or tristimulus values of the video or image 5, which results in producing of the scrambled view 4 of the video or image 5.

The correction device includes a screen processing unit 12 which fetches the correction gamma table 10 from the memory unit 6 via the display processing unit 9. Once received, the screen processing unit 12 applies the correction gamma table 10 onto luminance or tristimulus value of the scrambled view 4 of the video or image 5, to descramble the scrambled view 4, and to produce the recognizable view 13 of the video or image onto the correction screen 11 of the correction device 2.

The processing unit 14 of the correction device 2 is divided into two parts, one part is the correction screen 11 and the other part is a normal screen 15. The descrambling of the scrambled view 4 occurs onto the correction screen 11, while the normal screen remains transparent all throughout for allowing viewing of other environmental elements where the correction device is placed. In an alternate embodiment, the correction device 2 only has the correction 11 and do not has the normal screen, and thus enables either viewing of the scrambled view after descrambling, or remain transparent to be enabled to view all the environmental elements when descrambling is not occurring.

In one embodiment, the correction device 2 is an eye wearable, like glasses or spectacles. This helps the user to wear the correction device 2 to keep the correction screen 11 exactly before the eyes of the user. This eye wearable can also have a screen unit 14 which is divided into two parts, the correction screen 11 and the normal screen 15. In another embodiment, the normal screen 15 can be on the upper part of the screen unit 14, and the correction screen 11 shall be on the lower part of the screen unit 14. The eye wearable is such that, when it is worn, the screen unit 14 only before one of the eyes of the user. In a further embodiment, the screen unit 14 is provided in such a way that, once the correction device 2 is worn, the normal screen 15 shall be placed before only one of the eyes of the user, and the correction screen 11 can be placed on the other eye of the user. The placement and size of the correction screen 11 and the normal screen 15 can be such that it provides an optimal and clear viewing of the video or image 5 after descrambling the scrambled view 4, and also other environmental elements, other than the video or image 5 appropriately.
In one embodiment, the correction gamma table 10 is transpose of the lookup gamma table 7. Being transpose to the lookup gamma table 7, the correction gamma table 10 provides an accurate recognizable view 13 which matches to the view of the video or image 5, if the video or image 5 shall be displayed onto the display screen 8 without scrambling.

The correction gamma table 10 is kept in the memory unit 6 of the display device 1. And the screen processing unit 12 of the correction device 2 fetches the correction gamma table 10 from the memory unit 6 via the display processing unit 9. This allows for a real-time configuration of the correction device 2 for pairing it with the display device 1. It is to be noted, if the devices 1, 2 are not paired, the recognizable view shall not be appropriate and recognizable by the human eye. This also ensures that any correction device 2 which is not paired with the display device 1, is not eligible to see contents 5 from the display device 1. In one embodiment, for pairing, and sending the correction gamma table 10, an authentication mechanism be used, where only once the correction device 2 is authorized, it shall be able to receive the correction gamma table 10 from the memory unit 6 of the display device 1.

In one embodiment, the pairing between the devices 1, 2 happens only when the privacy mode begins, i.e., the display processing unit 9 starts fetching and applying the lookup gamma table 7 onto the luminance or tristimulus values of the video or image 5. On such occurrence, the display processing unit 9 also fetches the correction gamma table 10 and send it to the screen processing unit 12, for carrying out an instantaneous pairing between the devices 1, 2. Once the screen processing unit 1 receives the correction gamma table 10, it also starts applying the correction gamma table 10 onto luminance or tristimulus values of the scrambled view 4 of the video or image 5, and to produce the recognizable view 13 of the video or image 5.

In current embodiment of the Fig 1, the correction gamma table 10 shall be sent to the correction device 2, even before the scrambled view 4 is started being produced. And, when the display processing unit 9 starts applying the lookup gamma table 7 onto the luminance or tristimulus values of the video or image 5, it also generates a trigger 18, which it sends to the screen processing unit 12, so that the screen processing unit 12 is triggered to start application of the correction gamma table 10 onto luminance or tristimulus value of the scrambled view 4 of the video or image 5.

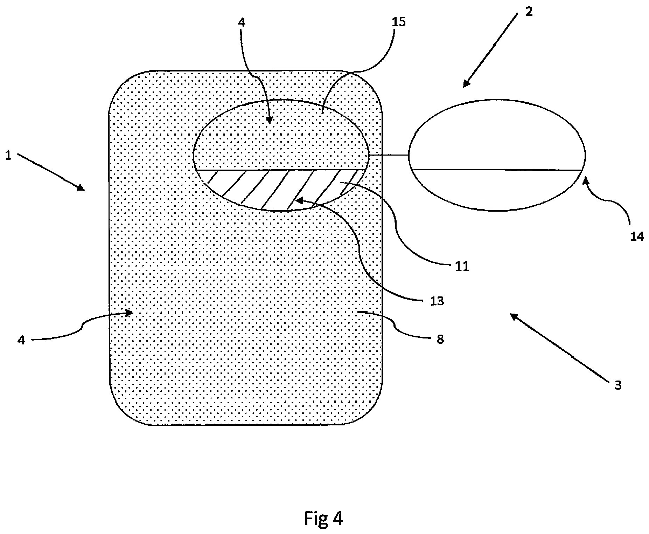

Fig. 4 shows an implementation of the invention with a system 1 of a mobile phone as display device 1, and a glass as a correction device 2. The display device 1 has a screen 8 onto which after processing by display processing unit, a scrambled view 4 is shown. When the glass 2 is placed before the screen 8 of the display device 1, the correction screen 11 after applying the correction gamma table shows a recognizable view 13 is shown. This recognizable view 13 is the actual intended view, and has been scrambled to provide the scrambled view 4 to provide privacy for viewing the contents. The glasses 2 has two glass parts to be placed before each of the eyes. Each glass has a screen unit 14 which has two parts, the correction screen 11 which is enabled to provide the recognizable view 13 when privacy mode is on, and a normal screen 15 which can only provide a non-processed view and hence when the privacy view is on, and if the eye looks through the normal screen 15, it can only view the scrambled view 4 which provide illegible contents unrecognizable by human eye.

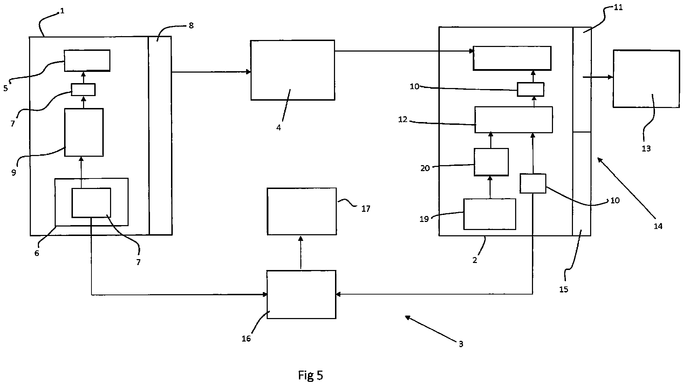

Fig. 5 illustrates a schematic diagram of another automatic system 3 for scrambling and descrambling content for private viewing of the content 5 in the public. Many of the elements are the same as of as the system 3 of Fig 1, and performs same or similar functionality. Hence, while discussing the Fig 2, we shall emphasize and discuss on those elements which were either not present in Fig 1, or performs different functionality with respect to the ones presented in Fig 1.

In this system 3, the memory unit 6 of the display device 1 does not store the correction gamma table 10, however, it is fetched by the correction device 2 from somewhere else, or is already stored within the correction device 2. It is to be noted that if the manufacturer of the display device 1 and the correction device 2 is same, and is selling both of them as already paired, the correction lookup table may already be stored in non-erasable memory of the correction device 2. In some cases, where the correction device 2 is misplaced or damaged, and a new correction device 2 is provided, a pairing of the new correction device 2 shall be required with the display device 2, for a proper functional system 3. In such a case, the manufacturer may provide an option to remotely download the correction gamma table 10 into the correction device 2, after due authentication of ownership of the display device 1. There can also be a possibility that the manufacturer of the display device 1 and the correction device 2 can be different, and in such cases, the buyer of the correction device 2 shall be provided with means to download the appropriate correction gamma table 10 from the manufacturer of the display device 1, so as to pair the correction device 2 with the display device 1.

For verifying, if the devices 1, 2 can be paired or not, a system processing unit 16 is provided which fetches the lookup gamma table 7 from the display device 1 and the correction gamma table 10 from the correction device 2 and generates a determination 17 regarding pairing of the tables to each other to provide the recognizable view 13 using the correction gamma table 10 onto the luminance or tristimulus of the scrambled view 4. In case, if the determination 17 is negative, the user of the devices 1, 2 shall be notified in advance, so that they shall avoid going for privacy mode, before getting the devices 1, 2 which pairs.

Also, in spite of triggering by the display processing unit 9 for starting the descrambling of the scrambled view of the video or image 5, such triggering can automatically happen by using a sensor 19 of the correction device 2. The sensor 19 detects production of the scrambled view 4 of the video or image 5 and generates a detection data 20, and further sends it to the screen processing unit 12. The screen processing unit 12 receives and processes the detection data 20, and based on the processing of the detection data 20, initiates application of the correction gamma table 10 onto luminance or tristimulus value of a scrambled view 4 of the video or image 5.

It should be noted that there can be one to many relationships between the devices 1, 2, i.e., more than one display devices 1 can be paired to one correction device 2, or vice versa.

When one display device 1 and multiple correction device 2 are to be paired, it can happen, if each of the correction device 2 has the correction gamma table 10 corresponding to the lookup gamma table 7 of the display device 1. This embodiment has a utility specially in the scenario where the contents 5 to be shown on the display device 1 are copyright protected, and only limited number of people, who may have paid for, are allowed to view the content 5.

In case, where one correction device 2 is to be paired to multiple display device 1, the correction device 2 needs to store all the correction gamma tables 10 which corresponds to the lookup gamma tables 7 of the display devices 1, to which the correction device 2 is required to be paired to. To utilize the correction device 2, the correction device 2 first identifies to which display device 1 it is to be paired to at a particular point of time, and based on the identification, the screen processing unit 12 of the correction device 2 has to fetch appropriate correction gamma table, so that the system 3 can be workable.

Thus, the present invention provides a system 3 for enabling privacy while using a display device 1. The system 2 comprises a display device 1 and a correction device 2. The display device 1 comprises a memory unit 6 which stores a lookup gamma table 7, a display screen 8 which receives and displays the video or image 5, and a display processing unit 9 which fetches the gamma lookup table 7, and applies the gamma lookup table 7 onto luminance or tristimulus values of the video or image 5. On application of the gamma lookup table 7, the video or image 5 is scrambled to provide the scrambled view 4 for the video or image 5. The correction device 2 comprising a correction screen 11 which is transparent to allow see through by a human eye, and a screen processing unit 12 which fetches a correction gamma table 10 corresponding to the gamma lookup table 7, and applies the correction gamma table 10 onto luminance or tristimulus value of the scrambled view 4 of the video or image 5. On application of the correction gamma table 10 onto the scrambled view 4, the scrambled view 4 of the video or image 5 is descrambled and provides a recognizable view 13 of the video or image 5.

In summary, a system 3 for enabling privacy while using a display device 1 is described which comprises a display device 1 and a correction device 1. The display device 1 comprises a memory unit 6 adapted to store a lookup gamma table 7, a display screen 8 adapted to receive and display the video or image 5, and a display processing unit 9 adapted to fetch the gamma lookup table 7, and to apply the gamma lookup table 7 onto luminance or tristimulus values of the video or image 5, wherein on application of the gamma lookup table 7, the video or image 5 is scrambled to provide the scrambled view 4 for the video or image 5. The correction device 2 comprising a correction screen 11 which is transparent to allow to see through by a human eye, and a screen processing unit 12 adapted to fetch a correction gamma table 10 corresponding to the gamma lookup table 7, and adapted to apply the correction gamma table 10 onto luminance or tristimulus value of the scrambled view 4 of the video or image 5, wherein on application of the correction gamma table 10 onto the scrambled view 4, the scrambled view 4 of the video or image 5 is descrambled to provide a recognizable view 13 of the video or image 5.

### List of reference numbers

- 1: display device
- 2: correction device
- 3: system of display device and correction device
- 4: scrambled view
- 5: image or video content
- 6: memory unit
- 7: lookup gamma table
- 8: display screen
- 9: display processing unit
- 10: correction gamma table
- 11: correction screen
- 12: screen processing unit
- 13: recognizable view
- 14: screen unit
- 15: normal screen
- 16: system processing unit
- 17: determination of pairing of the tables
- 18: trigger
- 19: sensor
- 20: detection data
- 21: Axis representing perceived brightness
- 22: Axis representing actual luminance
- 23: first curve representative of actual luminance for perceived brightness by the human eye
- 24: second curve representative of actual luminance for perceived brightness an image captured by a camera
- 25: third curve representative of luminance flow for a gamma encoded image captured by a camera
- 26: fourth curve representative of luminance flow of a gamma correction be applied by the display device
- 27: fifth curve representative of a corrected luminance flow of the image after being rendered by the display device

## Claims

1. A display device (1) for providing a scrambled view (4) for a video or image (5) such that the scrambled view (4) is unrecognizable by a person, the display device (1) comprising:
- a memory unit (6) adapted to store a lookup gamma table (7);
- a display screen (8) adapted to receive and display the video or image (5); and
- a display processing unit (9) adapted to fetch the gamma lookup table (7), and to apply the gamma lookup table (7) onto luminance or tristimulus values of the video or image (5), wherein on application of the gamma lookup table (7), the video or image (5) is scrambled to provide the scrambled view (4) for the video or image (5);
wherein, the scrambled view (4) is adapted to be descrambled to provide a recognizable view (13) of the video or image by applying a correction gamma table (10) corresponding to the gamma lookup table (7) to luminance or tristimulus value of the scrambled view (4).

2. A correction device (2) adapted to descramble a scrambled view (4) of a video or image (5) comprising:
- a correction screen (11) which is transparent to allow to see through by a human eye; and
- a screen processing unit (12) adapted to fetch a correction gamma table (10) corresponding to the gamma lookup table (7), and adapted to apply the correction gamma table (10) onto luminance or tristimulus value of the scrambled view (4) of the video or image (5),
wherein on application of the correction gamma table (10) onto the scrambled view (4), the scrambled view (4) of the video or image (5) is descrambled to provide a recognizable view (13) of the video or image (5).

3. The correction device (2) according to the claim 2 comprising a screen unit (14), which further comprises the correction screen (11), and a normal screen (15) which is transparent and onto which the correction gamma table (10) is not applied.

4. The correction device (2) according to any of the claims 2 or 3, wherein the correction device (2) is an eye wearable which is adapted to be worn by a human to keep the correction screen (11) before the human eyes.

5. A system (3) for enabling privacy while using a display device (1) comprising:
- the display device (1) comprising a memory unit (6) adapted to store a lookup gamma table (7), a display screen (8) adapted to receive and display the video or image (5), and a display processing unit (9) adapted to fetch the gamma lookup table (7), and to apply the gamma lookup table (7) onto luminance or tristimulus values of the video or image (5), wherein on application of the gamma lookup table (7), the video or image (5) is scrambled to provide the scrambled view (4) for the video or image (5); and
- a correction device (2) comprising a correction screen (11) which is transparent to allow to see through by a human eye, and a screen processing unit (12) adapted to fetch a correction gamma table (10) corresponding to the gamma lookup table (7), and adapted to apply the correction gamma table (10) onto luminance or tristimulus value of the scrambled view (4) of the video or image (5), wherein on application of the correction gamma table (10) onto the scrambled view (4), the scrambled view (4) of the video or image (5) is descrambled to provide a recognizable view (13) of the video or image (5).

6. The system (3) according to claim 5 comprising the correction device (2) according to any of the claims 2 to 4.

7. The system (3) according to claim 5 or 6, wherein the correction gamma table (10) is transpose of the lookup gamma table (7).

8. The system (3) according to any of the claims 5 to 7 comprising:
- a system processing unit (16) adapted to receive and process the correction gamma table (10) and the lookup gamma table (7), and to generate a determination (17) regarding pairing of the tables to each other to provide the recognizable view (13) using the correction gamma table (10) onto the luminance or tristimulus of the scrambled view (4).

9. The system (3) according to any of the claims 5 to 8, wherein the memory unit (6) further stores the correction gamma table (10) corresponding to the lookup gamma table (7), and the display processing unit (9) is adapted to fetch and send the correction gamma table (10) to the screen processing unit (12).

10. The system (3) according to the claim 9, wherein the display processing unit (9) is adapted to fetch and send the correction gamma table (10) to the screen processing unit (12), when the display processing unit (9) begins applying the lookup gamma table (7) onto luminance or tristimulus values of the video or image (5).

11. The system (3) according to any of the claims 5 to 10, wherein the display processing unit (9) is adapted to generate a trigger (18) related to initiation of descrambling by the correction device (2), when the display processing unit (9) starts applying the lookup gamma table (7) onto luminance or tristimulus values of the video or image (5), and the screen processing unit (12) is adapted to receive the trigger (18) and to initiate application of the correction gamma table (10) onto luminance or tristimulus value of the scrambled view (4) of the video or image (5).

12. The system (3) according to any of the claims 5 to 11, wherein the correction device (2) comprises a sensor (19) to detect production of the scrambled view (4) of the video or image (5) and to generate a detection data (20), wherein the screen processing unit (12) is adapted to receive and process the detection data (20), and based on the processing of the detection data (20), to initiate application of the correction gamma table (10) onto luminance or tristimulus value of a scrambled view (4) of the video or image (5).
